# EUROPEAN PATENT APPLICATION

(11) **EP 1 698 787 A2**
(43) Date of publication of application: **06.09.2006**
(21) Application number: 06251093.8
(22) Date of filing: 01.03.2006
(51) Int. Cl.: F16C 3/03

(54) **Method of manufacturing an axially collapsible splined assembly**

(30) Priority: 05.03.2005 US 658899 P
(71) Applicant: DANA CORPORATION, Toledo, OH 43615 (US)
(72) Inventor: Gibson, Daniel W., Maumee Ohio 43537 (US)
(74) Representative: Giles, Ashley Simon

(57) **Abstract**

A method of manufacturing a driveshaft assembly (15') that is axially collapsible includes the initial step of disposing a first hollow member (23) about a forming mandrel (30) having a cavity (34) formed therein. The cavity (34) includes a first radially inwardly extending portion (34a) having a first radial depth (r₁), and a second radially inwardly extending portion (34c) having a second radial depth (r₂). The second radially inwardly extending portion (34c) extends axially from the first radially inwardly extending portion (34a). Then, the first hollow member (23) is deformed into conformance with the cavity (34) of the forming mandrel (30). A second hollow member (24) is positioned relative to the deformed first hollow member (23) and deformed into conformance with a deformed portion (23a) of the first hollow member (23). Such deformation may be by mechanical deformation, electromagnetic pulse forming, hydroforming, and the like. The first radially inwardly extending portion (34a) of the cavity (34) forms a first spline in the first hollow member (23), and also forms a spline in the second hollow member (24). The second radially inwardly extending portion (34c) of the cavity (34) forms a second spline in the first hollow member (23). Preferably, the first radial depth (r₁) is greater than the second radial depth (r₂).

## Description

### BACKGROUND OF THE INVENTION

This invention relates in general to methods for manufacturing axially collapsible splined assemblies for transferring power from a source of rotational power to a rotatably driven mechanism. In particular, this invention relates to an improved method for manufacturing an axially collapsible driveshaft assembly, such as for use in a vehicular drive train system.

Torque transmitting shafts are widely used for transferring rotational power from a source of rotational power to a rotatably driven mechanism. For example, in most land vehicles in use today, a drive train system is provided for transmitting rotational power from an output shaft of an engine/transmission assembly to an input shaft of an axle assembly so as to rotatably drive the wheels of the vehicle. To accomplish this, a typical vehicular drive train system includes a hollow cylindrical driveshaft tube. A first universal joint is connected between the output shaft of the engine/transmission assembly and a first end of the driveshaft tube, while a second universal joint is connected between a second end of the driveshaft tube and the input shaft of the axle assembly. The universal joints provide a rotational driving connection from the output shaft of the engine/transmission assembly through the driveshaft tube to the input shaft of the axle assembly, while accommodating a limited amount of misalignment between the rotational axes of these three shafts.

A recent trend in the development of passenger, sport utility, pickup truck, and other vehicles has been to design the various components of the vehicle in such a manner as to absorb energy during a collision, thereby providing additional safety to the occupants of the vehicle. As a part of this trend; it is known to design the drive train systems of vehicles so as to be axially collapsible so as to absorb energy during a collision. To accomplish this, the driveshaft tube may be formed as an assembly of first and second driveshaft sections that are connected together for concurrent rotational movement during normal operation, yet are capable of moving axially relative to one another when a relatively large axially compressive force is applied thereto, such as can occur during a collision. A variety of such axially collapsible and/or extendable driveshaft assemblies are known in the art.

It has been found to be desirable to design axially collapsible and/or extendable driveshaft assemblies of this general type such that a predetermined amount of force is required to initiate the relative axial movement between the two driveshaft sections. It has further been found to be desirable to design these axially collapsible and/or extendable driveshaft assemblies such that a predetermined amount of force (constant in some instances, varying in others) is required to maintain the relative axial movement between the two driveshaft sections. However, it has been found that the manufacture of such axially collapsible and/or extendable driveshaft assemblies is somewhat difficult and expensive to manufacture than convention non-collapsible driveshafts. Thus, it would be desirable to provide an improved method of manufacturing such an axially collapsible and/or extendable driveshaft assembly that is relatively simple and inexpensive.

### SUMMARY OF THE INVENTION

This invention relates to an improved method for manufacturing a driveshaft assembly that is axially collapsible. Initially, a first hollow member is disposed about a forming mandrel having a cavity formed therein. The cavity includes a first radially inwardly extending portion having a first radial depth, and a second radially inwardly extending portion having a second radial depth. The second radially inwardly extending portion extends axially from the first radially inwardly extending portion. Then, the first hollow member is deformed into conformance with the cavity of the forming mandrel. A second hollow member is positioned relative to the deformed first hollow member and deformed into conformance with a deformed portion of the first hollow member. Such deformation may be by mechanical deformation, electromagnetic pulse forming, hydroforming, and the like. The first radially inwardly extending portion of the cavity forms a first spline in the first hollow member, and also forms a spline in the second hollow member. The second radially inwardly extending portion of the cavity forms a second spline in the first hollow member. Preferably, the first radial depth is greater than the second radial depth. As a result, a rotational driving connection is provided between the first and second hollow members to form the driveshaft. When a relatively large axial force is applied to the ends of the telescoping driveshaft, the spline of the second hollow member will move axially about the first spline of the first hollow member to radially deform the spline of the second hollow member thereby collapsing the drive and absorbing energy while allowing the second hollow member to maintain radial alignment relative to the first hollow member.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a schematic view in elevation of a prior art drive train assembly including a conventional driveshaft tube for transmitting rotational power from an output shaft of an engine/transmission assembly to an input shaft of an axle assembly.

Fig. 2 is an enlarged side elevational view, partially in cross section, of a driveshaft assembly manufactured in accordance with the method of this invention.

Fig. 3 is a sectional elevational view of a forming mandrel showing a portion of a first driveshaft section disposed thereabout prior to deformation.

Fig. 4 is a sectional elevational view of the forming mandrel and the first driveshaft section illustrated in Fig. 3 shown after deformation.

Fig. 5 is a sectional elevational view of the forming mandrel illustrated in Fig. 4 having a portion of a second driveshaft section disposed about the formed portion of the first driveshaft section prior to deformation.

Fig. 6 is a sectional elevational view of the forming mandrel illustrated in Fig. 5 showing the portion of the second driveshaft section after deformation.

Fig. 7 is a sectional elevational view of an alternate embodiment of the invention showing a portion of the first and second driveshaft sections disposed within a forming die and after deformation.

Fig. 8 is an enlarged side elevational view, partially in cross section, of a vehicle driveshaft assembly manufactured in accordance with another alternate embodiment of the method of this invention.

Fig. 9 is a sectional elevational view of a forming mandrel having a portion of the first driveshaft section illustrated in Fig. 8 disposed thereon prior to deformation.

Fig. 10 is a sectional elevational view of the forming mandrel illustrated in Fig. 9 showing the portion of the first driveshaft section after deformation.

Fig. 11 is a sectional elevational view of the forming mandrel illustrated in Fig. 10 having a portion of a second driveshaft section disposed about the formed portion of the first driveshaft section prior to deformation.

Fig. 12 is a sectional elevational view of the forming mandrel illustrated in Fig. 11 showing the portion of the second driveshaft section after deformation.

Fig. 13 is a sectional elevational view of another alternate embodiment of the invention showing a portion of the first and second driveshaft sections disposed within a forming die and after deformation.

Figs. 14A through 14G are partial sectional elevational views comparing a prior art collapsible driveshaft and exemplary embodiments of the driveshaft manufactured in accordance with the method of the invention.

Fig. 15 is a sectional elevational view of a forming mandrel for forming another alternate embodiment of the driveshaft according to the method of the invention, showing a portion of the first and the second driveshaft sections after deformation.

### DETAILED DESCRIPTION OF THE PREFERRED EMBODIMENTS

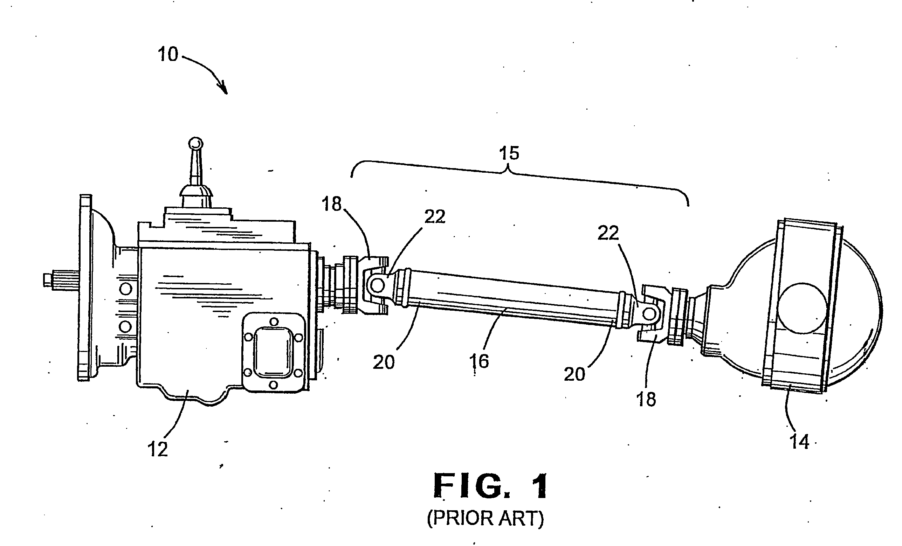

Referring now to the drawings, there is illustrated in Fig. 1 a vehicular drive train system, indicated generally at 10, that is conventional in the art. The prior art drive train system 10 includes a transmission 12 that is connected to an axle assembly 14 through a driveshaft assembly 15. The driveshaft assembly 15 includes an elongated, cylindrically-shaped driveshaft tube 16. As is typical in conventional vehicle drive train systems 10, the output shaft (not shown) of the transmission 12 and the input shaft (not shown) of the axle assembly 14 are not co-axially aligned. Therefore, universal joints 18 are provided at each end 20 of the driveshaft tube 16 to rotatably connect the driveshaft tube 16 at an angle to the output shaft of the transmission 12 and the input shaft of the axle assembly 14.

The connections between the ends 20 of the driveshaft tube 16 and the universal joints 18 are usually accomplished by a pair of end fittings 22, such as tube yokes or slip yokes. The ends 20 of the driveshaft tube 16 are open and are adapted to receive portions of the end fittings 22 therein. Typically, each end fitting 22 includes a tube seat (not shown) that is inserted into an open end 20 of the driveshaft tube 16. Typically, the end fitting 22 is secured to the driveshaft tube 16 by welding, adhesives, or similar relatively permanent attachment method. Accordingly, torque can be transmitted from the transmission 12 through the first end fitting 22, the driveshaft tube 16, and the second end fitting 22 to the axle assembly 14.

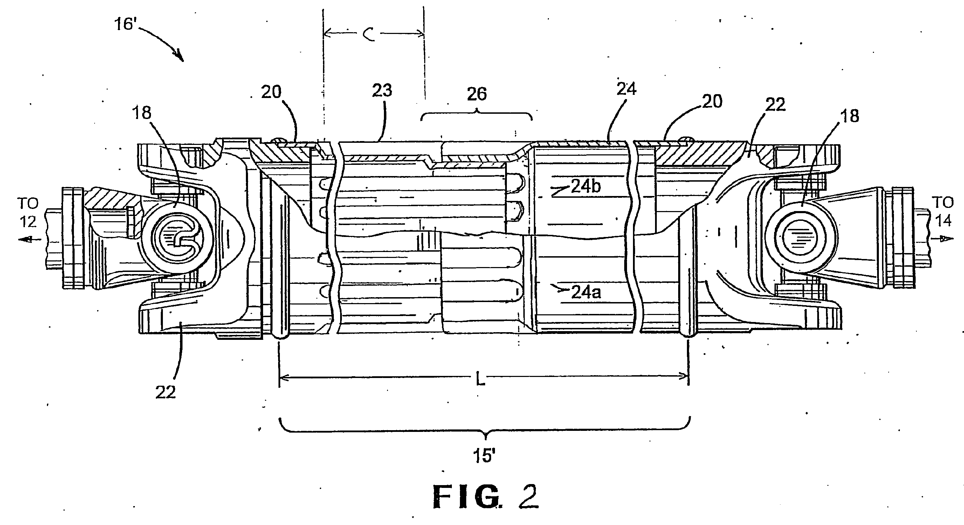

Fig. 2 illustrates an improved structure for a vehicle driveshaft assembly 15' in accordance with this invention. As shown therein, the driveshaft assembly 15' includes a modified driveshaft, indicated generally at 16', that is composed of an inner tube 23 received within an outer tube 24 in an axially overlapping or telescoping manner. In the illustrated embodiment, the inner tube 23 is connected to the front universal joint 18 (i.e. the universal joint 18 that is connected to the output shaft of the transmission 12), while the outer tube 24 is connected to the rear universal joint 18 (i.e. the universal joint 18 that is connected to the input shaft of the axle assembly 14). If desired, however, the inner tube 23 may be connected to the rear universal joint 18, and the outer tube 24 may be connected to the front universal joint 18.

The driveshaft 16' is generally hollow and cylindrical in shape, having an axial length L defined by the distance between the two ends 20 thereof. The overall length L of the driveshaft 16' can be varied in accordance with the vehicle in which it is used. For example, in passenger cars, the overall length L of the driveshaft 16' can be relatively short, such as in the range of from about thirty inches to about fifty inches. In pickup trucks or sport utility vehicles, however, the overall length L of the driveshaft 16' can be relatively long, such as in the range of from about sixty inches to about eighty inches. Each of the inner tube 23 and the outer tube 24 extends for a portion of the total axial length L, with a portion of the outer tube 24 and a portion of the inner tube 23 defining an axially overlapped or telescoping region 26. Portions of the inner tube 23 and the outer tube 24 engage one another within the axially overlapped region 26 to connect them together for concurrent rotational movement during normal operation, yet allow axial movement relative to one another when a relatively large axially compressive force is applied thereto, such as can occur during a collision. The manner in which these portions of the inner tube 23 and the outer tube 24 are formed is described in detail below.

The inner tube 23 and the outer tube 24 of the driveshaft 16' can be formed from any suitable material or combination of materials. Typically, the inner tube 23 and the outer tube 24 of the driveshaft 16' are formed from steel or an aluminum alloy. Other materials, such as fiber reinforced composites or other combinations of metallic or non-metallic materials, may also be used. Preferably, the inner tube 23 and the outer tube 24 of the driveshaft 16' are formed from an aluminum alloy. Suitable methods for forming the inner tube 23 and the outer tube 24 of the driveshaft 16' are well known to persons skilled in the art. In the illustrated embodiment, the inner tube 23 and the outer tube 24 of the driveshaft 16' are both formed having a relatively constant outer diameter. However, if desired, either or both of the inner tube 23 and the outer tube 24 of the driveshaft 16' can be formed having a larger diameter center portion, a pair of end portions having a reduced diameter, and a diameter reducing portion extending between the center and end portions. This type of driveshaft is more fully described in assignee's commonly owned U.S. Patent Nos. 5,637,042 and 5,643,093, the contents of which are hereby incorporated by reference.

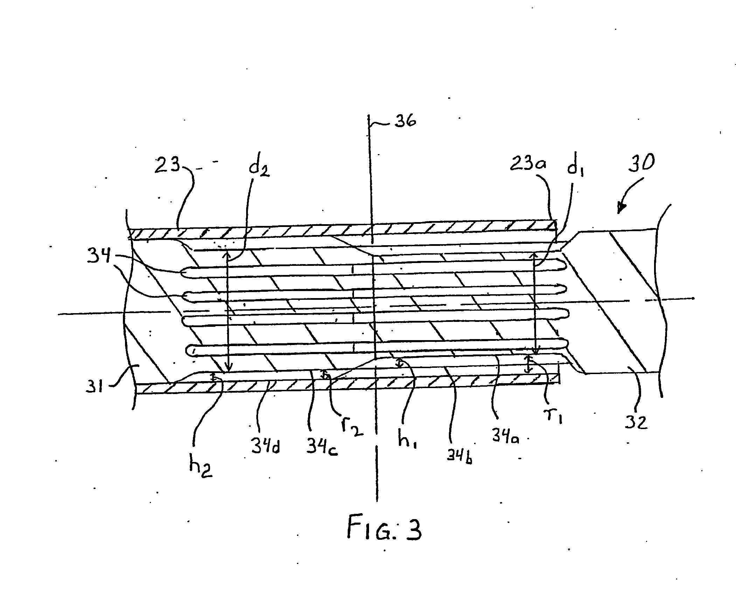

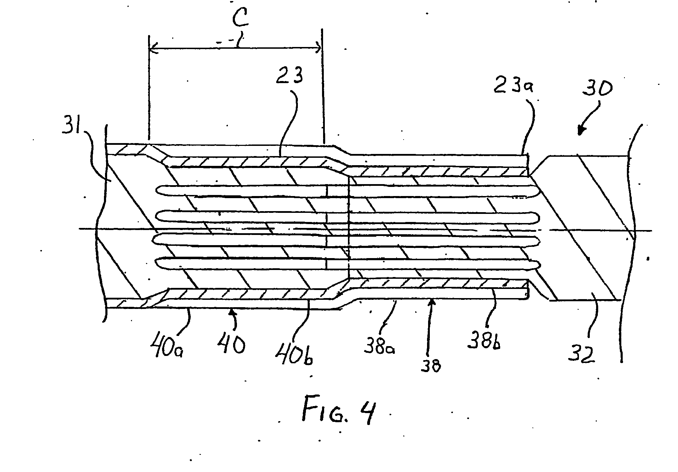

The method of manufacturing the driveshaft 16' is shown in Figs. 3 through 6. Initially, as shown in Figs. 3 and 4, a forming mandrel, indicated generally at 30, is provided. The forming mandrel 30 includes a first mandrel section 31 and a second mandrel section 32 that are supported for relative movement between opened and closed positions. The mandrel 30 includes a plurality of cavities 34 which together define a mandrel surface having a desired shape. The mandrel 30 may be moved to the opened position (not shown) in order to axially remove the mandrel sections 31 and 32 from the formed driveshaft 16', as will be described below. In the closed position, the mandrel sections 31 and 32 are joined together by any suitable method along a line 36 to allow a workpiece to be inserted about the mandrel 30. Preferably, the mandrel 30 has a cross sectional shape that is generally circumferentially undulating (not shown). However, the mandrel 30 may be formed having any desired (preferably non-circular, as will become apparent below) cross sectional shape.

Preferably, the mandrel 30 includes a plurality of cavities 34. Each cavity 34 includes a first radially inwardly extending portion 34a and a first radially outwardly extending portion 34b. The first inwardly extending portion 34a has a first radial depth r₁ defining a first minor diameter d₁. The first outwardly extending portion 34b has a first radial height h₁. A second radially inwardly extending portion 34c extends axially from the first inwardly extending portion 34a and has a second radial depth r₂ defining a second minor diameter d₂. A second radially outwardly extending portion 34d extends axially from the first outwardly extending portion 34b and has a second radial height h₂. Preferably, the second minor diameter d₂ is greater than the first minor diameter d₁. As will be described below, the first portions 34a and 34b of the cavities form a plurality of first splines 38 at a first end 23a of the inner tube 23, and the second portions 34c and 34d of the cavities form a plurality of second splines 40 extending axially from the first splines 38 opposite the first end 23a of the inner tube 23.

To begin the manufacturing process, the mandrel sections 31 and 32 are initially moved to the closed position so that a first end 23a of the inner tube 23 can be inserted thereon. Next, as shown in Fig. 4, the first end 23a of the inner tube 23 is deformed inwardly into conformance with the shape of the mandrel 30. This deformation can be accomplished in any desired manner, such as by mechanical deformation, electromagnetic pulse forming, hydroforming, and the like. Preferably, the deformation is accomplished by electromagnetic pulse forming. As a result of this deformation, the end 23a of the inner tube 23 is formed having a circumferentially undulating cross sectional shape including a plurality of first radially outwardly extending regions 38a, and first radially inwardly extending regions 38b. Second radially outwardly extending regions 40a extend axially from the first outwardly extending regions 38a, and second radially inwardly extending regions 40b extend radially from the first radially inwardly extending regions 38b. The outwardly extending regions 40a and inwardly extending regions 40b have an axial length C, which may be varied as will be described below. As will become apparent below, the first and second outwardly extending regions 38a and 40a, and the first and second inwardly extending regions 38b and 40b of the end 23a of the inner tube 23 define first splines 38 and second splines 40, respectively, and function as a male splined member to provide a rotational driving connection with the outer tube 24.

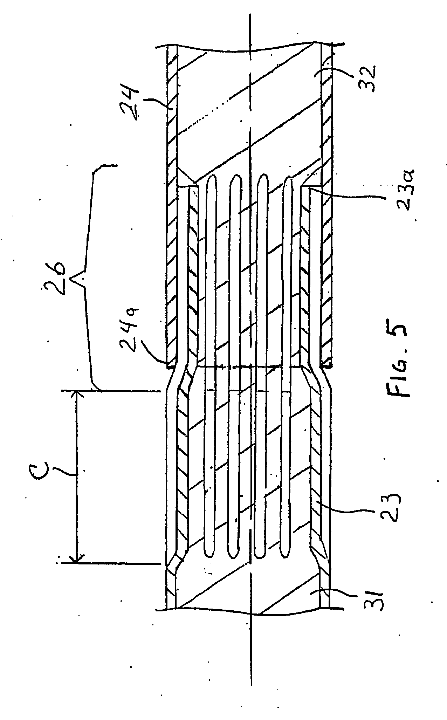

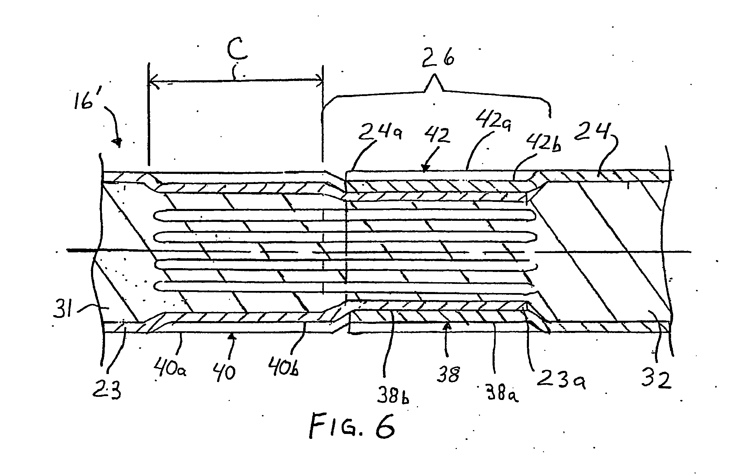

Following this deformation, a first end 24a of the outer tube 24 is inserted about the formed end 23a of the inner tube 23, as shown in Fig. 5. Next, as shown in Fig. 6, the end of the outer tube 24 is deformed inwardly into conformance with the end 23a of the inner tube 23. This deformation can also be accomplished in any desired manner, such as by mechanical deformation, electromagnetic pulse forming, hydroforming, and the like. Preferably, the deformation is also accomplished by electromagnetic pulse forming. As a result of this deformation, the end 24a of the outer tube 24 is also formed having a circumferentially undulating cross sectional shape including a plurality of radially outwardly extending regions 42a and a plurality of radially inwardly extending regions 42b. As best shown in Fig. 6, the outwardly extending regions 38a of the inner tube 23 extend into cooperation with the outwardly extending regions 42a of the outer tube 24. Similarly, the inwardly extending regions 38b of the inner tube 23 extend into cooperation with the inwardly extending regions 42b of the outer tube 24. Thus, the outwardly extending regions 38a and the inwardly extending regions 38b of the inner tube 23 function as the male splined member 38, and the outwardly extending regions 42a and the inwardly extending regions 42b of the outer tube 24 function as a female splined member 42. The inner tube 23 thereby provides a rotational driving connection with the outer tube 24. It can be seen, therefore, that the inner and outer tubes 23 and 24 function as cooperating male and female splined members, thereby providing a rotational driving connection therebetween.

The outwardly extending regions 3 8a and 42a and the inwardly extending regions 38b and 42b may extend continuously around the entire perimeter of the overlapped region 26, as shown in Figs. 2 and 6, or around only a portion thereof. Preferably, however, the outwardly extending regions 38a and 42a and the inwardly extending regions 38b and 42b are formed around the entire perimeter of the overlapped region 26. The number and configuration of the outwardly extending regions 38a and 42a and the inwardly extending regions 38b and 42b may vary depending upon a number of factors, including the torque requirements of the driveshaft 16', the physical sizes of the inner tube 23 and the outer tube 24, and the materials chosen for the driveshaft 16'. However, any number of outwardly extending regions 38a and 42a and the inwardly extending regions 38b and 42b may be spaced apart around the entire perimeter of the overlapped region 26 or a portion thereof.

The number, configuration, and length C of the second outwardly extending regions 40a and the second inwardly extending regions 40b may also vary depending upon a number of factors, including the length of the desired axial collapse of the driveshaft 16', the axially compressive force desired for axial collapse of the driveshaft 16', the physical sizes of the inner tube 23 and the outer tube 24, and the materials chosen for the driveshaft 16', Preferably, the number of outwardly extending regions 40a and inwardly extending regions 40b are equal to the number of outwardly extending regions 38a and inwardly extending regions 38b from which they axially extend.

In operation, the outwardly extending regions 38a and 42a and the inwardly extending regions 32b and 42b cooperate to form a mechanical interlock between the inner tube 23 and the outer tube 24 that increases the overall torque carrying capacity of the driveshaft 16'. When a relatively large axial force is applied to the ends of the telescoping driveshaft 16', however, the inner tube 23 will be forced to move axially within the outer tube 24. Specifically, the inwardly extending regions 42b of the outer tube 24 will engage the second inwardly extending regions 40b of the inner tube 23 causing the inwardly extending regions 42b to radially deform. The inwardly extending regions 42b will move axially within the second inwardly extending regions 40b for a maximum predetermined distance C. Such axial movement of the inwardly extending regions 42b within the second inwardly extending regions 40b will allow the inner tube 23 to maintain radial alignment relative to the outer tube 24 during the axial deformation of the driveshaft 16'. Accordingly, the overall length of the driveshaft 16' collapses or shortens, thereby absorbing energy during this process. Typically, appropriately large axial forces are generated during a front-end impact of the vehicle with another object that cause this collapse to occur.

As discussed above, the method of this invention contemplates that the inner tube 23 will be initially deformed to a desired shape about the forming mandrel 30, then the outer tube 24 will be subsequently deformed to conform with the shape of the inner tube 23. However, it will be appreciated that the outer tube 24 and the inner tube 23 can be simultaneously deformed instead of being sequentially deformed as described and illustrated.

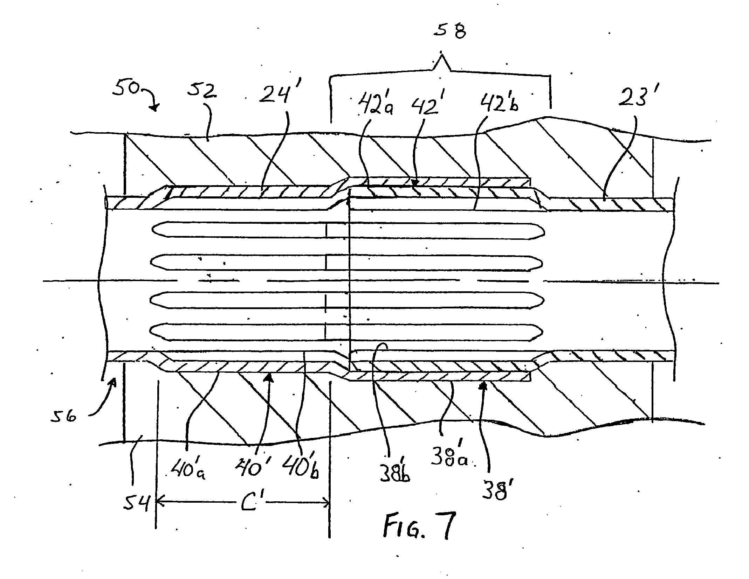

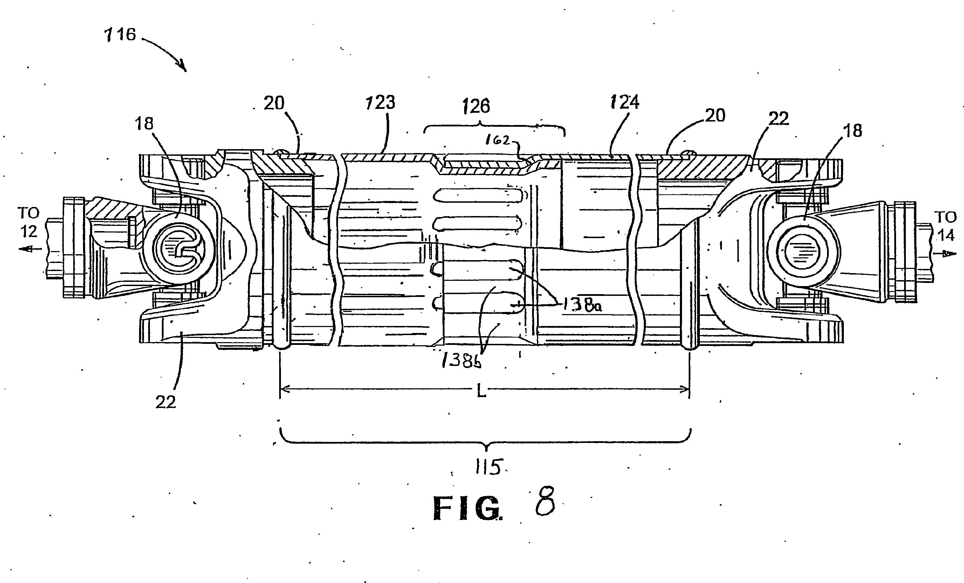

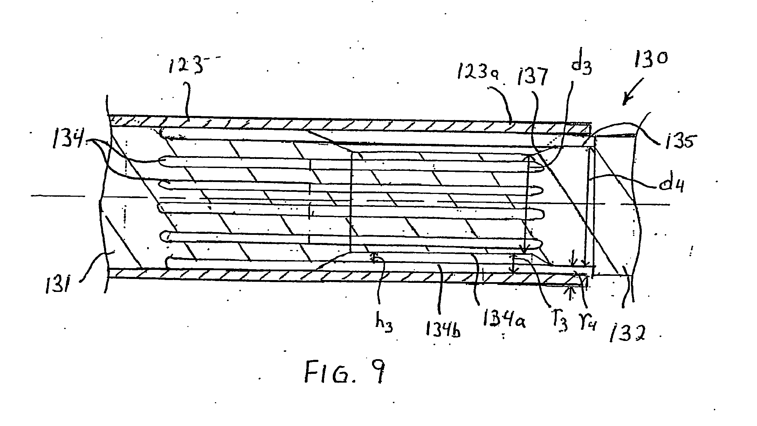

It will also be appreciated that the method of this invention could be performed by expansion of the inner tube 23 and the outer tube 24. For example, Fig. 7 shows an another embodiment of a driveshaft 56 of the invention and illustrates such an expansion. This method of forming a driveshaft is more fully described in assignee's commonly owned U.S. Patent Application No. 60/370066, filed April 4, 2002, the content of which is hereby incorporated by reference. As illustrated in Fig. 7, a forming die, indicated generally at 50 is provided. The forming die includes a pair of opposed die sections 52 and 54. The die sections 52 and 54 have recesses that define a die cavity and are supported for relative movement between opened and closed positions.

According to the method shown in Fig. 7, an outer tube 24' is inserted between the die sections 52 and 54 and the forming die 50 is moved to a closed position. The outer tube is then expanded outwardly into conformance with the die cavity. An end of the inner tube 23' is then inserted into the overlapped region 58 and expanded outwardly into conformance with the outer tube 24'. As a result of this expansion, a portion of the inner tube 23' is also formed having the same non-circular cross sectional shape as the outer tube 24'. This expansion can be accomplished in any desired manner, such as by mechanical deformation, electromagnetic pulse forming, hydroforming, and the like.

The outer tube 24' is formed a plurality of first radially outwardly extending regions 38'a, and first radially inwardly extending regions 38'b. Second radially outwardly extending regions 40'a extend axially from the first outwardly extending regions 38'a, and second radially inwardly extending regions 40'b extend radially from the first radially inwardly extending regions 38'b. The first and second outwardly extending regions 38'a and 40'a, and the first and second inwardly extending regions 38'b and 40'b of the outer tube 24' define first splines 38' and second splines 40', respectively, and function as a male splined member to provide a rotational driving connection with the inner tube 23'.

The inner tube 23' is also formed having a circumferentially undulating cross sectional shape including a plurality of radially outwardly extending regions 42'a and a plurality of radially inwardly extending regions 42'b. The outwardly extending regions 38'a of the outer tube 24' extend into cooperation with the outwardly extending regions 42'a of the inner tube 23'. Similarly, the inwardly extending regions 38'b of the outer tube 24' extend into cooperation with the inwardly extending regions 42'b of the inner tube 23'. Thus, the outwardly extending regions 38'a and the inwardly extending regions 38'b of the outer tube 24' function as a female splined member to provide a rotational driving connection with the inner tube 23'. It can be seen, therefore, that the inner and outer tubes 23' and 24' function as cooperating male and female splined members, thereby providing a rotational driving connection therebetween. It will be appreciated that the outer tube 24' and the inner tube 23' can be simultaneously deformed instead of being sequentially deformed as described and illustrated.

When a relatively large axial force is applied to the ends of the telescoping driveshaft 56, the inner tube 23' will be forced to move axially within the outer tube 24'. Specifically, the inwardly extending regions 42'b of the inner tube 23' will engage the second inwardly extending regions 40'b of the outer tube 24' causing the inwardly extending regions 42'b to radially deform. The inwardly extending regions 42'b will move axially within the second inwardly extending regions 40'b for a maximum predetermined distance C'. Such axial movement of the inwardly extending regions 42'b within the second inwardly extending regions 40'b will allow the inner tube 23' to maintain radial alignment relative to the outer tube 24' during the axial deformation of the driveshaft 56. Accordingly, the overall length of the driveshaft 56 collapses or shortens, thereby absorbing energy during this process.

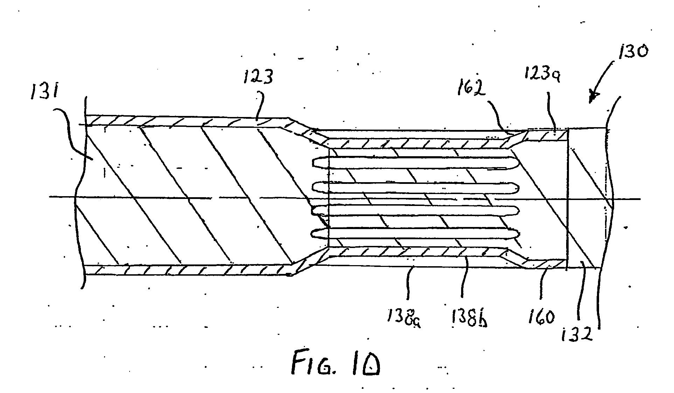

Fig. 8 illustrates another embodiment of an improved structure for a vehicle driveshaft assembly 115 in accordance with this invention. A modified driveshaft 116 is substantially identical to the driveshaft 16', however, the overlapped region 126 includes a mechanical stop 162 formed in the inner tube 23 for improved prevention of axial extension of the driveshaft 116 during normal operation of the vehicle.

The method of manufacturing an alternate embodiment of the driveshaft 116 is shown in Figs. 9 through 12. Initially, as shown in Fig. 9, a forming mandrel, indicated generally at 130, is provided. The forming mandrel 130 includes first mandrel section 131 and second mandrel section 132 that are supported for relative movement between opened and closed positions. The mandrel 130 includes a plurality of cavities 134 which together define a mandrel surface having a desired shape.

Each cavity 134 includes a first radially inwardly extending portion 134a and a first radially outwardly extending portion 134b. The first inwardly extending portion 134a has a third radial depth r₃ defining a third minor diameter d₃. The first outwardly extending portion 134b has a third radial height h₃.

The mandrel 130 also includes an annular cavity 135 adjacent the portions 134a and 134b of the cavities 134. The annular cavity 135 defines a fourth mandrel diameter d₄, has a fourth radial depth r₄, and defines a transition surface 137. The transition surface 137 also forms an end of each inwardly extending portion 134a. Preferably, the fourth diameter d₄ is greater than the third minor diameter d₃. Although the cavity 135 is illustrated as having a substantially uniform diameter d₄, it will be appreciated that the cavity 135 may be formed having a cross sectional shape that is circumferentially undulating. For example, the cavity 135 may include a plurality of inwardly extending portions extending axially from the first inwardly extending portions 134a and a plurality of outwardly extending portions extending axially from the first outwardly extending portions 134b.

Next, as shown in Fig. 10, the end of the inner tube 123 is deformed inwardly into conformance with the shape of the mandrel 130. This deformation can be accomplished in any desired manner, such as by mechanical deformation, electromagnetic pulse forming, hydroforming, and the like. Preferably, the deformation is accomplished by electromagnetic pulse forming. As a result of this deformation, the end 123a of the inner tube 123 is formed having a circumferentially undulating cross sectional shape including a plurality of male splined members 138 having a radially outwardly extending region 138a and a radially inwardly extending region 138b. The end 123a of the inner tube 123 is further formed having a reduced diameter portion 160. The reduced diameter portion 160 defines a transition surface or stop 162.

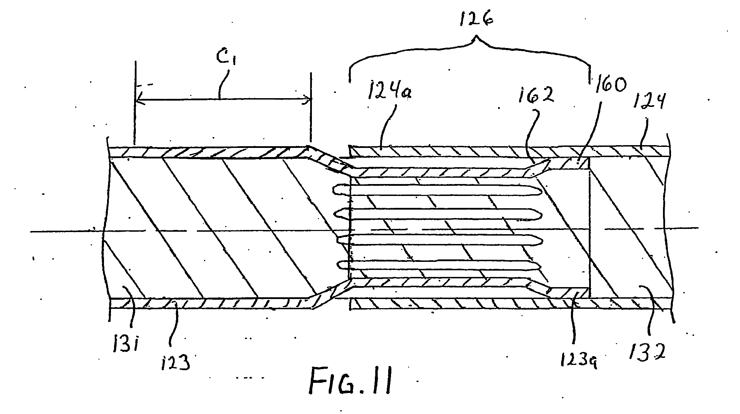

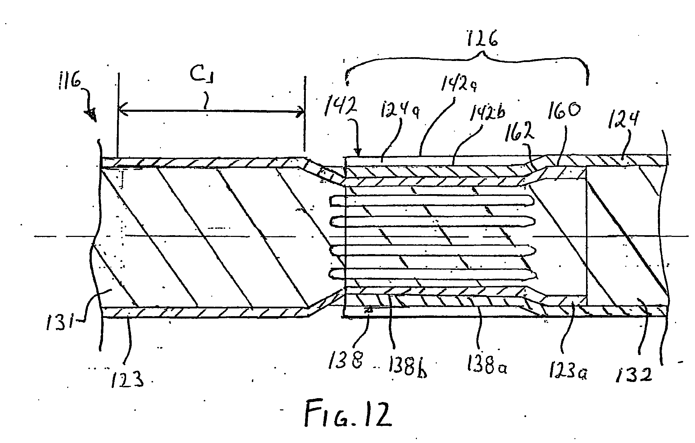

Following this deformation, a first end 124a of the outer tube 124 is inserted about the formed end 123a of the inner tube 123, as shown in Fig. 11. Next, as shown in Fig. 12, the first end 124a of the outer tube 124 is deformed inwardly into conformance with the first end 123a of the inner tube 123. This deformation can also be accomplished in any desired manner, such as by mechanical deformation, electromagnetic pulse forming, hydroforming, and the like. Preferably, the deformation is also accomplished by electromagnetic pulse forming. As a result of this deformation, the end 124a of the outer tube 124 is also formed having a circumferentially undulating cross sectional shape including a plurality of female splined members 142 having a radially outwardly extending region 142a and a radially inwardly extending region 142b. As best shown in Fig. 12, the male splined members 138 engage the stop 162 at a transition surface 163 of the outer tube 124 between the splines 138 and the reduced diameter portion 160.

In operation, the outwardly extending regions 138a and 142a and the inwardly extending regions 138b and 142b cooperate to form a mechanical interlock between the inner tube 123 and the outer tube 124 that increases the overall torque carrying capacity of the driveshaft 116. When a relatively large axial force is applied to the ends of the telescoping driveshaft 116, however, the inner tube 123 will be forced to move axially within the outer tube 124. Specifically, the inwardly extending regions 142b of the outer tube 124 will engage the second inwardly extending regions 140b of the inner tube 123 causing the inwardly extending regions 142b to radially deform. The inwardly extending regions 142b will move axially within the second inwardly extending regions 140b for a maximum predetermined distance C₁. Such axial movement of the inwardly extending regions 142b within the second inwardly extending regions 140b will allow the inner tube 123 to maintain radial alignment relative to the outer tube 124 during the axial deformation of the driveshaft 116. Accordingly, the overall length of the driveshaft 116 collapses or shortens, thereby absorbing energy during this process. Typically, appropriately large axial forces are generated during a front-end impact of the vehicle with another object that cause this collapse to occur. Additionally, when a relatively large axial force is applied to the driveshaft 116 in an opposite direction, the stop 162 of the inner tube 123 substantially prevents the inner tube 123 from moving axially within the outer tube 124, thereby increasing the axial forces required to axial extend the driveshaft 116.

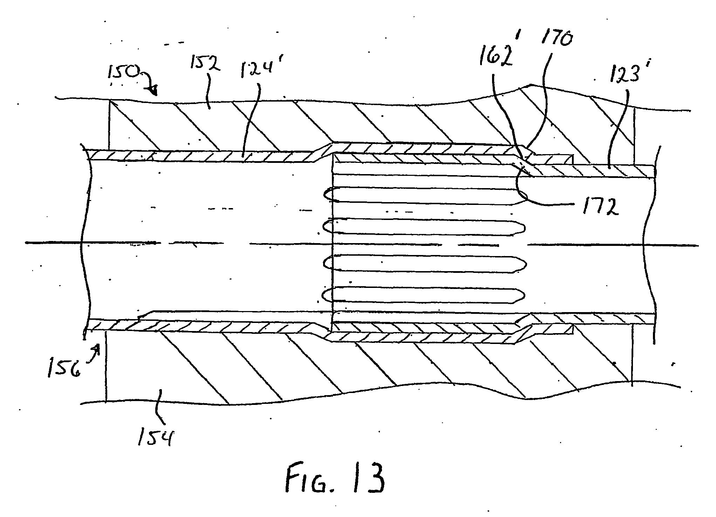

Yet another embodiment of the invention is illustrated in Fig. 13. As shown, a driveshaft 156 is substantially identical to the driveshaft 56 and is expanded in a substantially identical manner in a forming die 150. The forming die 150 includes a pair of opposed die sections 152 and 154. The die sections 152 and 154 have recesses that define a die cavity and are supported for relative movement between opened and closed positions. However, outer tube 124' of driveshaft 156 includes a transition section 170 which engages a corresponding transition section 172 in the inner tube 123'. The transition sections 170 and 172 define a stop 162'. The stop 162' substantially prevents the inner tube 123' and the outer tube 124' from extending axially relative to one another when a relatively large axial force is applied to the driveshaft 156. In all other aspects, the driveshaft 156 is identical to the driveshaft 56.

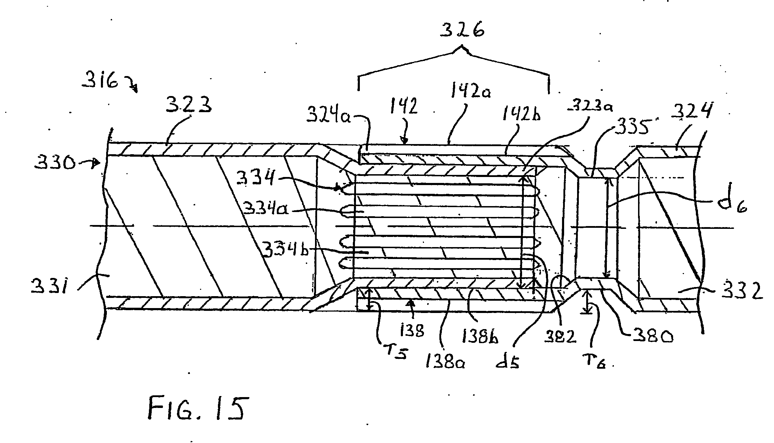

Figs. 14E and 15 illustrate another embodiment of an improved structure for a driveshaft 316 in accordance with the method of this invention. The driveshaft 316 is substantially identical to the driveshaft 116, however, the driveshaft 316 does not include the mechanical stop 162.

The method of manufacturing the driveshaft 316 is substantially identical to the method shown in Figs. 9 through 12. Initially, a forming mandrel, indicated generally at 330, is provided. The forming mandrel 330 includes first mandrel section 331 and second mandrel section 332 that are supported for relative movement between opened and closed positions. The mandrel 330 includes a plurality of cavities 334 which together define a mandrel surface having a desired shape.

Each cavity 334 includes a first radially inwardly extending portion 334a and a first radially outwardly extending portion 334b. The first inwardly extending portion 334a has a fifth radial depth r₅ defining a fifth minor diameter d₅.

The mandrel 330 also includes an annular cavity 335 spaced a distance from the cavities 334. The annular cavity 335 defines a sixth minor diameter d₆, and has a sixth radial depth r₆. Preferably, the fifth radial depth r₅ is at least as deep as the sixth radial depth r₆. Although the cavity 335 is illustrated as having a substantially uniform diameter d₆, it will be appreciated that the cavity 335 may be formed having a cross sectional shape that is circumferentially undulating.

Next, the end of the inner tube 323 is deformed inwardly into conformance with the shape of the mandrel 330. This deformation can be accomplished in any desired manner, such as by mechanical deformation, electromagnetic pulse forming, hydroforming, and the like. Preferably, the deformation is accomplished by electromagnetic pulse forming. As a result of this deformation, the end 323a of the inner tube 323 is formed having a circumferentially undulating cross sectional shape including a plurality of male splined members 138 having a radially outwardly extending region 138a and a radially inwardly extending region 138b.

Following this deformation, a first end 324a of the outer tube 324 is inserted about the formed end 323a of the inner tube 323, thereby defining the overlapped region 326. Next, as shown in Fig. 15, the first end 324a of the outer tube 324 is deformed inwardly into conformance with the first end 323a of the inner tube 323, and into conformance with the annular cavity 335. This deformation can also be accomplished in any desired manner, such as by mechanical deformation, electromagnetic pulse forming, hydroforming, and the like. Preferably, the deformation is also accomplished by electromagnetic pulse forming. As a result of this deformation, the end 324a of the outer tube 324 is also formed having a circumferentially undulating cross sectional shape including a plurality of female splined members 142 having a radially outwardly extending region 142a and a radially inwardly extending region 142b. The outer tube 324 is also formed having a circumferential recess 380.

In operation, the male splines 138 and the female splines 142 cooperate to form a mechanical interlock between the inner tube 323 and the outer tube 324 that increases the overall torque carrying capacity of the driveshaft 316. When a relatively large axial force is applied to the ends of the telescoping driveshaft 316, the inner tube 323 will be forced to move axially within the outer tube 324, as described herein. The bump 382 provides an additional feature for controlling the load at which the driveshaft 316 will collapse.

The primary function of the splines 138 and 142 is to provide torque transfer from one of the inner tube 323 and the outer tube 324 to the other of the inner tube 323 and the outer tube 324. Consequently, it may be desirable to provide an additional feature, such as the bump 382, for adjusting and controlling the collapse load of the driveshaft 316.

As described in detail herein, when the driveshaft 316 is compressed, such as during a front end vehicle collision, the inner tube 323 will slide into the outer tube 324 when the collapse load of the driveshaft 316 has been reached. During such compression, a first end 323a of the inner tube 323 will engage the bump 382 causing the first end 323a of the inner tube 323 to radially deform, thereby absorbing additional energy during this process. Such radial deformation of the inner tube 323 will increase the collapse load required to collapse the driveshaft 316. Advantageously, the dimensions of the bump 382 can be adjusted to provide a desired collapse load in the driveshaft 316.

Although the bump 3 82 is illustrated as formed in the outer tube 324, the bump can also be formed in the inner tube 323, or formed in both the inner tube 323 and the outer tube 324.

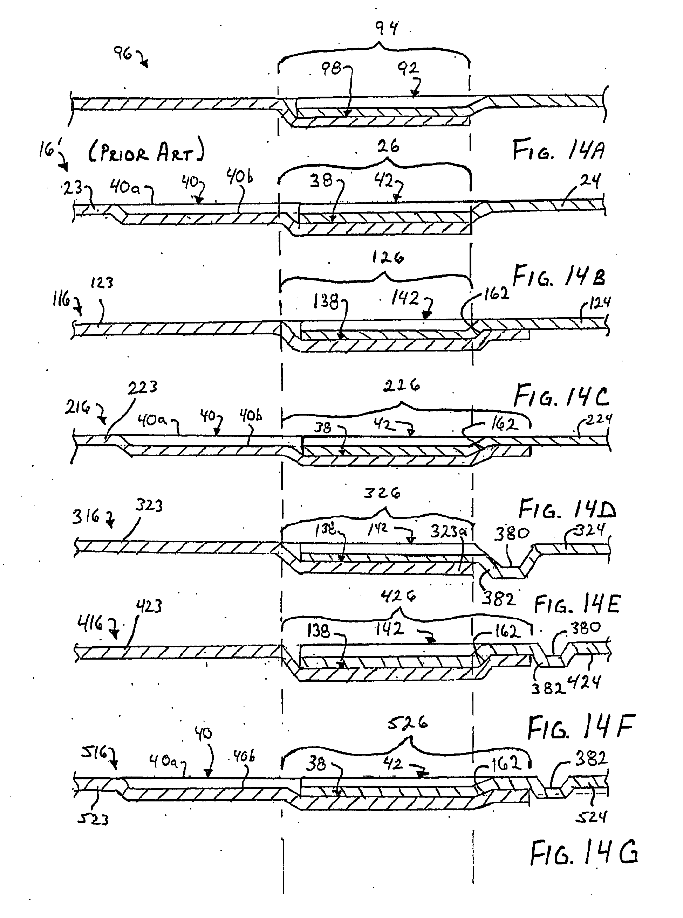

Figs. 14A through 14G include partial sectional elevational views which compare a prior art collapsible driveshaft (Fig. 14A) and exemplary embodiments (Figs. 14B through 14G) of the driveshaft manufactured in accordance with the method of the invention.

An additional embodiment of the invention is illustrated in Fig. 14D. As shown, a driveshaft 216 is substantially identical to the driveshaft 16'. The driveshaft 216 is composed of an inner tube 223 received within an outer tube 224 in an axially overlapping or telescoping manner. Additionally, the driveshaft 216 includes the stop 162 for safely and effectively preventing axial extension of the driveshaft 216.

Another embodiment of the invention is illustrated in Fig. 14F. As shown, a driveshaft 416 is substantially identical to the driveshaft 316. The driveshaft 416 is composed of an inner tube 423 received within an outer tube 424 in an axially overlapping or telescoping manner. Additionally, the driveshaft 416 includes the stop 162 for safely and effectively preventing axial extension of the driveshaft 416.

Yet another embodiment of the invention is illustrated in Fig. 14G. As shown, a driveshaft 516 is substantially identical to the driveshaft 216. The driveshaft 516 is composed of an inner tube 523 received within an outer tube 524 in an axially overlapping or telescoping manner. Additionally, the driveshaft 516 includes the circumferential recess 380 and corresponding bump 382 on an inner surface of the outer tube 524.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method of manufacturing an axially collapsible splined assembly comprising the steps of:
(a) disposing a first hollow member about a forming mandrel having a cavity including a first radially inwardly extending portion having a first radial depth and a second radially inwardly extending portion having a second radial depth, the second radially inwardly extending portion extending axially from the first radially inwardly extending portion;
(b) deforming the first hollow member into conformance with the cavity of the forming mandrel;
(c) disposing a second hollow member relative to the first hollow member; and
(d) deforming the second hollow member into conformance with a deformed portion of the first hollow member to form an axially collapsible splined assembly.

2. The method according to Claim 1 wherein the first radial depth of the forming mandrel is greater than the second radial depth.

3. The method according to Claim 1 wherein the forming mandrel has first and second mandrel sections that are movable between opened and closed positions.

4. The method according to Claim 1 wherein the first radially inwardly extending portion of the cavity forms a reduced diameter portion in the first hollow member.

5. The method according to Claim 1 wherein a transition portion is formed between the first radially inwardly extending portion and the second radially inwardly extending portion, the transition portion forming a stop between portions of the first and second hollow members.

6. The method according to Claim 1 wherein the cavity of the forming mandrel includes a third radially inwardly extending portion having a third radial depth.

7. The method according to Claim 6 wherein the third radially inwardly extending portion of the cavity forms a radially inwardly extending bump in the second hollow member.

8. The method according to Claim 6 wherein the cavity of the forming mandrel includes a fourth radially inwardly extending portion having a fourth radial depth.

9. The method according to Claim 1 wherein the cavity includes a plurality of first radially inwardly extending portions, each having a first radial depth, and a plurality of second radially inwardly extending portions, each having a second radial depth, the second radially inwardly extending portions extending axially from the first radially inwardly extending portions.

10. The method according to Claim 11 wherein said steps (b) and (d) are performed by one of mechanical deformation, electromagnetic pulse forming, and hydroforming.
